## Europäisches Patentamt

(19) **European Patent Office**

(11) Veröffentlichungsnummer: **0 173 223**

**Office européen des brevets**

**B1**

(12) **EUROPÄISCHE PATENTSCHRIFT**

(45) Veröffentlichungstag der Patentschrift:
**29.03.89**

(51) Int. Cl.⁴: **A 01 F 12/44,** A 01 D 41/12

(21) Anmeldenummer: **85110424.0**

(22) Anmeldetag: **20.08.85**

(54) **Mähdrescher mit einer nach dem Axialflussprinzip arbeitenden Trennvorrichtung.**

(30) Priorität: **29.08.84 US 646346**

(43) Veröffentlichungstag der Anmeldung:
**05.03.86 Patentblatt 86/10**

(45) Bekanntmachung des Hinweises auf die Patenterteilung:
**29.03.89 Patentblatt 89/13**

(84) Benannte Vertragsstaaten:
**BE DE FR GB IT**

(56) Entgegenhaltungen:
**WO-A-82/03963**
**DE-A-2 503 693**
**US-A-3 995 645**
**US-A-4 408 618**

(73) Patentinhaber: **DEERE & COMPANY, 1 John Deere
Road, Moline Illinois 61265 (US)**

(72) Erfinder: **Hall, James William, 3280 Quail Ridge,
Bettendorf Iowa 52722 (US)**
Erfinder: **Popelier, Maurice Alois, 7615 - 36th
Avenue, Moline Illinois 61265 (US)**
Erfinder: **Leemans, Daniel Louis, 2806 - 18th Street
Ct, Moline Illinois 61265 (US)**

(74) Vertreter: **Feldmann, Bernhard, DEERE &
COMPANY European Office, Patent Department
Steubenstrasse 36- 42 Postfach 503, D-6800
Mannheim 1 (DE)**

## Beschreibung

Die Erfindung bezieht sich auf einen Mähdrescher mit einer nach dem Axialflußprinzip arbeitenden Trennvorrichtung mit mindestens einem einen um eine Drehachse umlaufenden Rotor aufweisenden Trenngehäuse, wobei jeder Rotor einen Rotorrahmen und zahlreiche sich davon nach außen zum Trenngehäuse hin erstreckende Finger aufweist, die Finger Erntegut in Form einer Erntegutmatte mit Unterstützung von im Trenngehäuse schraublinienförmig angeordneten Führungsrippen durch einen zwischen dem Rotorrahmen und dem Trenngehäuse gebildeten Ringspalt in Umfangsrichtung schraublinienförmig stromabwärts bewegen und derart auf dem Rotor angeordnet sind, daß sie durch auf sie einwirkende Kräfte aus einer zum Trenngehäuse gerichteten ersten Stellung heraus in Richtung der Drehachse des Rotors ausbiegbar oder Verschwenkbar sind.

Es ist ein Mähdrescher der eingangs aufgeführten Art bekannt (US-A-4 408 618), der mit einer nach dem Axialflußprinzip arbeitenden, in einem zylindrischen Gehäuse angeordneten Trenntrommel ausgerüstet ist, auf deren einzelnen Achsabschnitten sich radial erstreckende Zinken angeordnet sind, die über einen Taumelscheibenantrieb in Umfangsrichtung des Trenngehäuses und in Axialrichtung der Drehachse des Rotors verstellbar gelagert sind, um auf diese Weise eine Ausscheidung des Erntegutes zu bewirken. Die Achse zur Aufnahme der einzelnen Finger besteht aus mehreren Teilabschnitten, die gegeneinander versetzt sind, so daß ein Teil der auf der Achse angeordneten Finger einen Rotationskreis beschreibt, der exzentrisch zum Trenngehäuse Verläuft. Der Antrieb der Achse sowie der einzelnen Finger erfolgt über getrennte Antriebsvorrichtungen. Ferner werden die Finger über einen Rotorrahmen besonders angetrieben, so daß wegen der erhöhten Reibung durch Anlage der Finger am Rotorrahmen insgesamt eine größere Antriebsenergie zur Verfügung gestellt werden muß.

Demgegenüber liegt der Erfindung die Aufgabe zugrunde, den Rotor mit den zugehörigen Fingern derart im Gehäuse anzuordnen, daß bei einem Minimum an Antriebsenergie ein gleichmäßiger Erntegutttransport durch das Gehäuse gewährleistet ist und dabei mittels der Finger eine gute Ausscheidung des Erntegutes herbeigeführt werden kann. Diese Aufgabe ist dadurch gelöst worden, daß die Drehachse des Rotors mit Bezug auf die Längsachse des Trenngehäuses derart radial versetzt ist, daß die Finger nur in einem Bereich auf einer Seite des Trenngehäuses in die Erntegutmatte eintauchen und dabei durch die sich stromabwärts bewegende Erntegutmatte ausgebogen oder verschwenkt werden. Durch die exzentrische Anordnung der Drehachse des Rotors greifen auf einfache Weise Finger lediglich für einen bestimmten Zeitabschnitt in das Erntegut ein und werden mittels der Erntegutbewegung in Axialrichtung verschwenkt bzw. ausgebogen, da diese auf dem Rotor ausbiegbar bzw. axial verschenkbar angeordnet sind. Eine Verschwenkung der einzelnen Finger in Axialrichtung läßt sich auch dadurch erreichen, daß beim Drehen des Rotors im Gehäuse die Finger gegen die Förderflächen der Führungsrippen zur Anlage kommen und dabei in einem bestimmten Bereich eine Axialbewegung ausführen, bis sie aus dem Wirkungsbereich der Führungsrippen wieder heraustreten, insbesondere dann, wenn die Finger aus der Erntegutmatte herausgezogen werden. Vorwiegend erfolgt der Transport des Erntegutes durch das Trenngehäuse durch die im Trenngehäuse vorgesehenen Führungsrippen, wobei die Finger hauptsächlich durch den Transport des Erntegutes bewegt werden und dabei den Trennvorgang des Erntegutes aus dem Stroh unterstützen. Hierdurch wird also auf einfache Weise ohne aufwendige Antriebsvorrichtungen eine Förderung des Erntegutes durch die Trennvorrichtung in Form einer spiralförmigen Matte gewährleistet und gleichzeitig auch der Antrieb für die Finger zum Herauslösen des Erntegutes aus dem Stroh sichergestellt, ohne daß ein großer Reibungswiderstand auftritt, da normalerweise die Finger nicht gegen die Führungsrippen anliegen. Da das Herauslösen des Erntegutes insbesondere über dem Trennsieb erfolgt, ist es vorteilhaft, daß die Finger nur über einem bestimmten Bereich in das Erntegut eintauchen und somit auf die Strohmatte einwirken. Hierzu sind die Finger derart auf dem Rotor angeordnet, daß sie sich bei Herausnahme aus der Erntegutmatte mittels der Zentrifugalkräfte wieder in ihre erste Stellung zurückbewegen. Vorteilhaft ist es dabei auch, daß die Finger bei Drehung des Rotors und vorwiegend durch Eintauchen In die Erntegutmatte stromabwärts verschwenkbar sind und einen derart großen Abstand zu den Führungsrippen aufweisen, daß sie sich berührungsfrei an den Führungsrippen vorbei bewegen.

In weiterer Ausgestaltung der Erfindung ist es vorteilhaft, daß die Finger derart beweglich auf dem Rotor angeordnet sind, daß sie sich in einer Ebene verschwenken lassen, die parallel zur Drehachse des Rotors verläuft, und daß der zwischen dem Rotor und der Innenoberfläche des Trenngehäuses gebildete Ringspalt eine unterschiedlich starke radiale Ausdehnung aufweist. Da der Ringspalt insbesondere über dem Trennsieb kleiner ist, wird unter Zuhilfenahme der in das Erntegut eintauchenden Finger eine intensive Behandlung des Erntegutes und somit das Herauslösen des Erntegutes aus dem Stroh gewährleistet. Nach dem Trennvorgang bewegt sich die Strohmatte wieder in den oberen Bereich des Trenngehäuses, in dem der Ringspalt größer ist, so daß der von den Fingern auf die Strohmatte abgegebene Bewegungsimpuls nicht übermäßig verringert wird, zumal die Führungsrippen auf das Erntegut einwirken und es weiterbewegen. Nachdem die Erntegutmatte den oberen Bereich des Ringspaltes passiert hat, wird es weiter spiralförmig durch das Gehäuse wieder in einen Bereich gefördert, in dem der Ringspalt kleiner ist. Hierzu sind alle Finger mit Bezug auf die Drehachse des Rotors hintereinander auf einer spiralförmig verlaufenden Linie angeordnet und das Trenngehäuse weist zumindest einen Teil mit Durchlaßöffnungen auf und die Finger sind, derart auf dem Rotor angeordnet daß sie sich bei Herausnahme aus der Erntegutmatte auf einem Kreisbogen bewegen, der in etwa rechtwinklig zur Drehachse des Rotors verläuft.

Damit ein jeder Finger sich in Axialrichtung ausbirgen kann, ist es vorteilhaft, daß ein jeder Finger federelastisch ausgebildet und freitragend auf dem Rotor fest angeordnet ist oder daß die Finger derart dicht nebeneinander angeordnet sind, daß sie eine zylindrische Bürste bilden. Außerdem ist es vorteilhaft, daß ein jeder Finger in Axialrichtung federelastischer ausgebildet ist als in Umfangsrichtung des Rotors.

Um eine übermäßige Auslenkung bzw. Verbiegung der Finger zu verhindern, ist es vorteilhaft, daß ein jeder Rotor zahlreiche als Anschläge ausgebildete aufweist, wobei jedes Widerlager die Schwenkbewegung zumindest eines Fingers begrenzt, während die Längsachsen zweier nebeneinander liegender Finger divergierend verlaufend angeordnet sind. Der Schwenkbereich der Finger läßt sich jedoch auch dadurch vergrößern, daß die Schwenkachse der Finger zwischen der Drehachse des Rotors und der Spitze der Finger liegt oder daß die Schwenkachse der Finger auf der einen Seite der Drehachse des Rotors und die Fingerspitze auf der anderen Seite der Drehachse liegt. Vorteilhaft ist es ferner, daß die Finger auf dem Rotor in Gruppen angeordnet sind und daß eine jede Gruppe zumindest zwei mit axialem Abstand angeordnete Finger aufweist. Da die einzelnen Finger in Gruppen an einer Achse schwenkbar angeschlossen sind, lassen sich auf einfache Weise Bauteile zur Montage der Finger einsparen. Durch die Zurückverstellung der Finger in ihre Normallage, nachdem sie aus der Erntegutmatte herausgezogen worden sind, steht den Fingern für den nächsten Eintauchvorgang in die Erntegutmatte erneut ein Stellweg zur Behandlung des Erntegutes zur Verfügung. Das Ausrichten der Finger läßt sich auf einfache Weise durch die Zentrifugalkräfte bewirken. Dabei ist es vorteilhaft, daß die schwenkbar am Rotorrahmen gelagerten Finger sich beiderseits der Drehachse radial erstrecken und daß bei Verschwenkung des einen Fingers in eine Richtung der andere Finger entgegengesetzt dazu zwangsweise verschwenkt wird und daß ein jedes Paar der sich in entgegengesetzter Richtung erstreckenden Finger an eine gemeinsame Achse angeschlossen ist. Wobei die gemeinsame Achse des Finger die Drehachse des Rotors in einem rechten Winkel schneidet und jeder Finger eines Fingerpaares sich in etwa rechtwinklig zur gemeinsamen Schwenkachse und beiderseits der Drehachse des Rotors erstreckt. Um den Eintauchvorgang der Finger in die Erntegutmatte zu begünstigen, ist es vorteilhaft, daß mit Bezug auf die Drehrichtung des Rotors zumindest der äußere Teil eines jeden Fingers sich nach vorne geneigt verlaufend erstreckt.

In weiterer Ausgestaltung der Erfindung ist es vorteilhaft, daß das Trenngehäuse im wesentlichen zylinderförmig ausgebildet und die Drehachse des Rotors derart exzentrisch im Trenngehäuse angeordnet ist, daß der radiale Abstand zwischen dem Rotor und dem Trenngehäuse zwischen einem Minimum und einem Maximum variiert, wobei die Lage des minimalen Abstandes der Zone entspricht, in der die Finger am tiefsten in das Erntegut eintauchen. Da der minimale Abstand des Ringspaltes über dem Trennsieb liegt, wird eine intensive Ausscheidung des Erntegutes aus dem Stroh gewährleistet. Hierzu ist es vorteilhaft, daß der Abschnitt des Trenngehäuses, der mit Durchlaßöffnungen versehen ist, von dem Arbeitsbereich der Finger überlappt wird, in den die Finger in das Erntegut eintauchen, und daß die Finger des Rotors und die im Trenngehäuse angeordneten Führungsrippen gleichmäßig verteilt im Trenngehäuse angeordnet sind, wobei der axiale Abstand zwischen den Führungsrippenoberflächen größer ist als der axiale Abstand zwischen den Fingern. Durch den größeren axialen Abstand zwischen den Förderflächen der Führungsrippen, insbesondere im Einzugsbereich, wird eine aggressive bzw. schnelle Aufnahme des Erntegutes im Einzugsbereich gewährleistet und der Weitertransport ohne auftretende Verstopfungen sichergestellt. Hierzu ist es vorteilhaft, daß die schneckenförmig verlaufenden Führungsrippen in dem Bereich an der Innenseite des Trenngehäuses vorgesehen sind, in dem die Finger in das Erntegut eintauchen, wobei der Eingriffsbereich in etwa 180° überspannt, und daß die schnekkenförmig verlaufenden Führungsrippen aus sich radial erstreckenden schraubenartigen Bändern gebildet sind, deren Höhe in Drehrichtung zunimmt, wobei die maximale Höhe in einem Bereich liegt, in dem die Finger keinen oder fast keinen Kontakt mit dem Erntegut haben. Ferner ist es vorteilhaft, daß der Bereich, in dem die Finger in das Erntegut eintauchen, unterhalb der Drehachse des Rotors liegt und daß zumindest ein Teil der Führungsrippen sich von diesem Bereich in Umfangsrichtung bis zum oberen Totpunkt des Trenngehäuses erstreckt und von diesem Bereich kontinuierlich an Höhe zunimmt und daß zwei Trenngehäuse nebeneinander angeordnet und zylinderförmig ausgebildet sind, die über eine quer verlaufende Dreschtrommel, eine parallel dazu verlaufende Fördertrommel sowie eine Strohleittrommel mit Erntegut beschickt werden, wobei die Fördertrommel zwischen der Dreschtrommel und der Strohleittrommel angeordnet ist und die Strohleittrommel und die Fördertrommel gegenläufig angetrieben werden. Durch die Verwendung der Fördertrommel und der Strohleittrommel hinter der Dreschvorrichtung, die quer verlaufend zur Förderrichtung des Erntegutes angeordnet ist, wird eine einwandfreie Beschickung des vorderen Bereichs der Trenntrommel von oben her über eine Einlaßöffnung gewährleistet. Hierzu ist es vorteilhaft, daß ein Einzugsgehäuseteil aus einem in etwa horizontal verlaufenden Boden gebildet ist, der bis zur Mittelebene des Trenngehäuses reicht, wobei zumindest eine Führungsrippe sich diagonal, über den Boden des Einzugsgehäuseteils bis zur gebogenen seitlichen Wand erstreckt, und daß der Einzugsteil des Rotors sich über die gesamte Länge des Einzugsgehäuseteils und der Trennteil sich über die gesamte Länge des Trenngehäuses erstreckt. Vorteilhaft ist es ferner, daß der Einzugsteil und der Trennteil des Rotors koaxial zueinander verlaufen und daß der Steigungswinkel der Führungsrippe im Einzugsgehäuseteil größer ist als der Steigungswinkel zumindest eines Teils der Führungsrippe im Trenngehäuse bzw. umgekehrt. Weiterhin ist es vorteilhaft, daß die Finger hintereinander in Form einer Spirale auf dem Rotor angeordnet sind, wobei der Verlauf der Spirale derart ist, daß die Förderfläche der Führungsrippe das Erntegut stromabwärts leitet, und daß in einem gehäuseauslater eines jeden Trenngehäuses zumindest eine spiralförmige Führungsrippe vorgesehen ist. Da Einzugsteil und Trennteil koaxial zueinander verlaufend angeordnet sind, wird keine zusätzliche Umlenkung des Erntegutes in der Trennvorrichtung vorgenommen, so daß ein gleichmäßiger Ernteguttransport gewährleistet wird. Durqh den gemeinsamen Einzugsgehäuseteil kann eine zügigere Aufnahme des Erntegutes erfolgen, wobei die Trennung des Erntegutes in zwei Erntegutströme hinter dem Einzugsgehäuseteil erfolgt. Hierbei unterstützen die in der Trennvorrichtung vorgesehenen Führungsrippen im Zusammenwirken mit den Fingern die Aufnahme des Erntegutes in die unterschiedlichen Trenngehäuse.

Im folgenden wird die Erfindung anhand von mehrere Ausführungswege darstellenden Zeichnungen näher erläutert. Es zeigt:

| Fig. 1 | eine Seitenansicht eines Mähdreschers mit einer nach dem Axialflußprinzip arbeitenden Trennvorrichtung, |
|---|---|
| Fig. 2 | die Dresch- und Trennvorrichtung, |
| Fig. 3 | eine Vorderansicht der Trennvorrichtung in der Ansicht entlang der Linie 3 - 3 gemäß Fig. 2, |
| Fig. 4 | eine Draufsicht des vorderen Teiles der Trennvorrichtung entlang der Linie 4 - 4 gemäß Fig. 3, |
| Fig. 5 | eine Seitenansicht des hinteren Teiles der Trennvorrichtung, |
| Fig. 6 | eine Draufsicht des hinteren Teiles der Trennvorrichtung mit der zugehörigen Antriebswelle, |
| Fig. 7 | eine perspektivische Darstellung eines Rotors mit den zugehörigen Fingern zur Behandlung des Erntegutes, |
| Fig. 8 | eine Teilansicht im Schnitt entlang der Linie 8 - 8 gemäß Fig. 2, |
| Fig. 9 | eine schematische Darstellung eines Teiles des vorderen Endes der Trennvorrichtung gemäß Fig. 8 sowie des Bewegungsablaufes eines Fingers während einer Umdrehung des Rotors, |
| Fig. 10 | eine Teilansicht der Finger entlang der Linie 8 - 8 gemäß Fig. 7, |
| Fig. 11 und 12 | eine Querschnittsdarstellung und eine Seitenansicht eines weiteren Ausführungsbeispiels des Rotors, |
| Fig. 13 | eine perspektivische Darstellung eines dritten Ausführungsbeispiels eines Rotors, |
| Fig. 14 und 15 | eine Querschnittsdarstellung und eine Seitenansicht eines vierten Ausführungsbeispiels des Rotors, |
| Fig. 16 | eine Frontansicht zweier nebeneinander liegender Bürsten zur Trennung des Erntegutes in zylinderförmig ausgebildeten Gehäusen. |

In der Zeichnung ist mit 10 das Gehäuse eines selbstfahrenden Mähdreschers bezeichnet, der mit vorderen Laufrädern 12 und hinteren steuerbaren Laufrädern 14 ausgerüstet ist. An der Stirnseite des Mähdreschers befindet sich eine Fahrerkabine 16, eine Erntebergungsvorrichtung 18 mit einem Schneidwerkstisch 20 und einem Schrägförderer 22, über den das Erntegut einem Dreschkorb 28 mit einer Dreschtrommel 26 zugeführt wird. Das Erntegut wird in der mit 24 bezeichneten Dreschzone in zwei Gutströme aufgeteilt, und zwar gelangt das ausgeschiedene Erntegut durch die im Dreschkorb vorgesehenen Öffnungen auf einen Schneckenförderer 32 und über diesen zu einer Reinigungsvorrichtung 34, während das über den Dreschkorb 28 nach hinten abgegebene Erntegut einer Trennvorrichtung 30 zugeführt wird. Das in der Reinigungsvorrichtung 34 behandelte Erntegut gelangt in einen oberhalb der Trennvorrichtung vorgesehenen Sammelbehälter 36, der über eine Entleerungsschnecke 38 entleert wird, während das ausgedroschene Stroh über eine Häckselvorrichtung 40 am hinteren Ende des Mähdreschers zerkleinert und dann nach außen hin abgegeben wird.

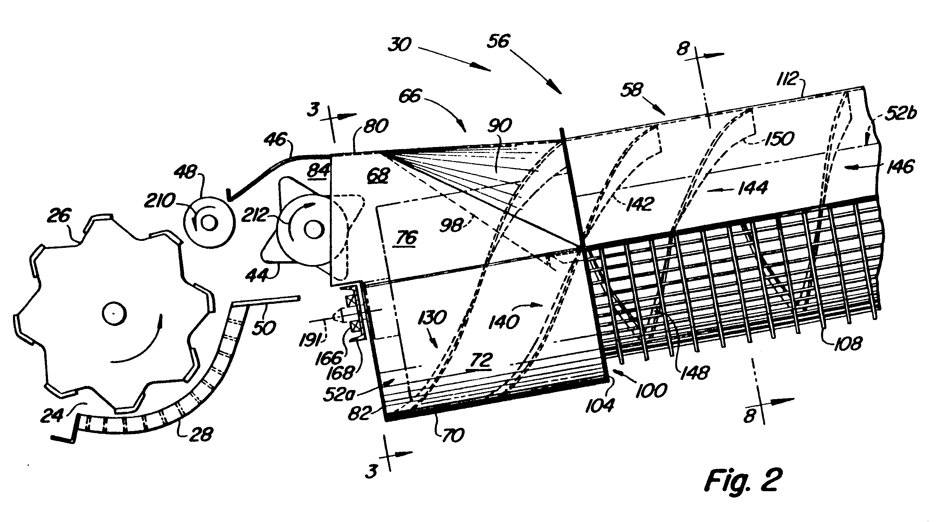

Die Trennvorrichtung 30 ist im Detail in den Figuren 2, 3 und 4 veranschaulicht. Das aus dem Dreschkorb 28 zentrifugalartig nach hinten abgegebene Erntegut wird einer Strohleittrommel 44 zugeführt, die mit einer Führungsplatte 46 zusammenwirkt. Wie aus Fig. 2 hervorgeht, wird die Dreschtrommel 26 im entgegengesetzten Uhrzeigerdrehsinn und die Strohleittrommel 44 im Uhrzeigerdrehsinn angetrieben, so daß das Erntegut über die Strohleittrommel der Trennvorrichtung 30 zugeführt wird. Die Förderung des Erntegutes wird durch eine Fördertrommel 48 unterstützt, die im Bereich des vorderen Endes der Führungsplatte 46 zwischen der Dreschtrommel 26 und der Strohleitrommel 44 angeordnet ist. Die Strohleittrommel 44 sowie die Führungsplatte 46 erstrecken sich über die gesamte Breite der Dreschtrommel 26. An das Auslaßende der Dreschtrommel 26 schließt Sich ein horizontal verlaufender und sich nach hinten erstreckender Fingerrechen 50 an, der verhindert, daß Stroh oder andere größere Erntegutteile auf den Schneckenförderer 32 abgegeben werden, sondern daß das Stroh und diese Erntegutteile der Trennvorrichtung 30 zugeführt werden.

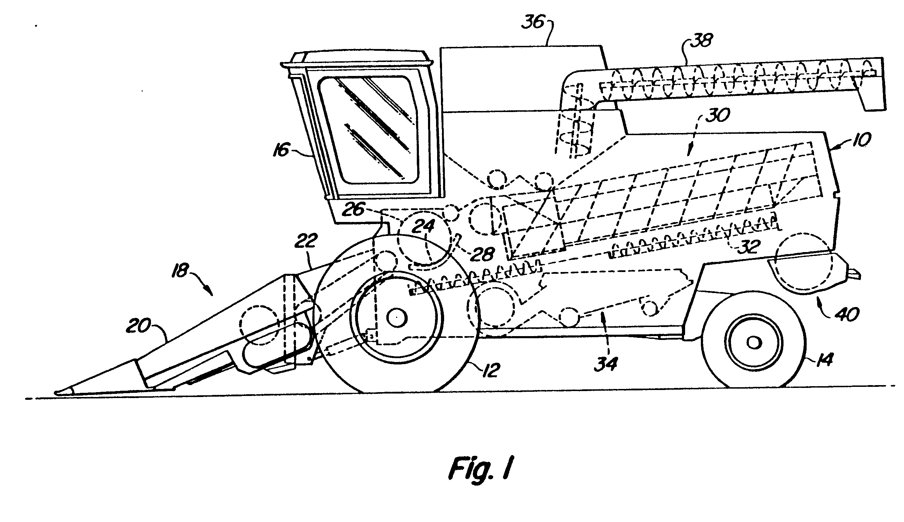

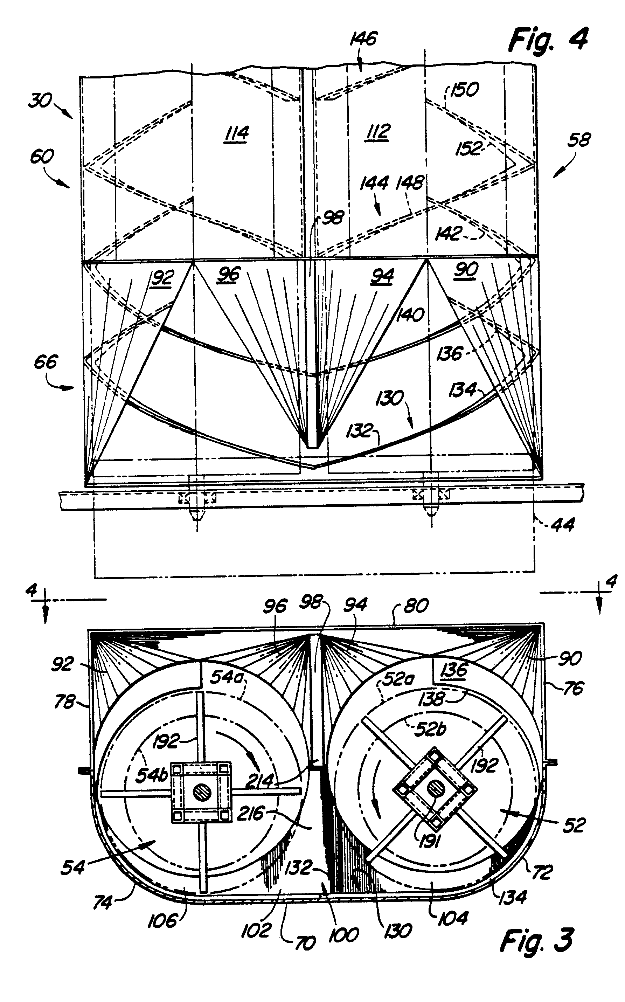

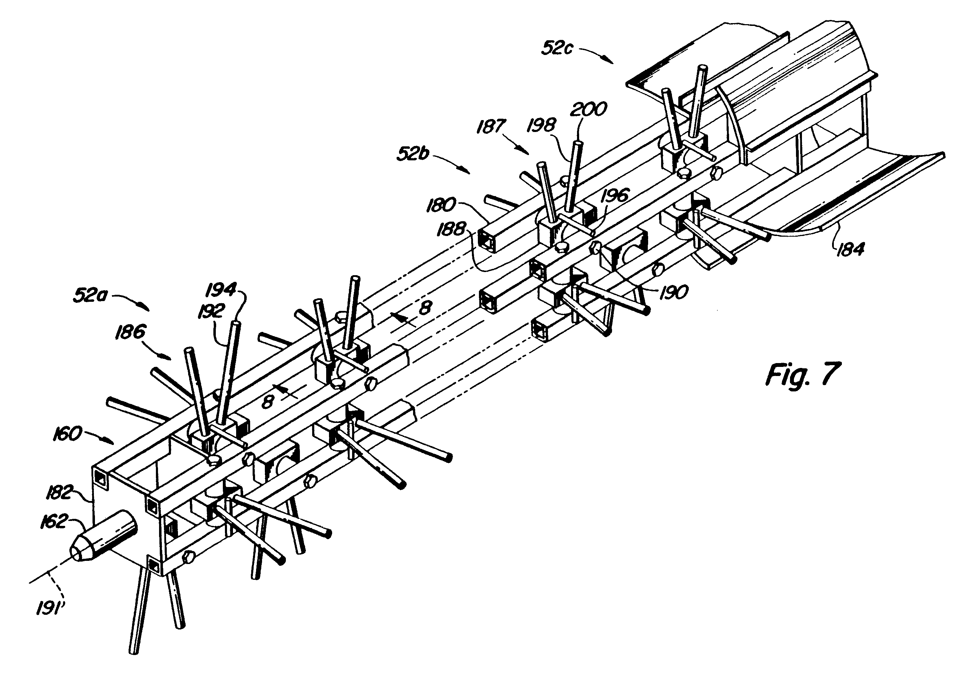

Wie aus Fig. 1 und insbesondere aus den Figuren 2, 3 und 4 hervorgeht, besteht die Trennvorrichtung 30 aus zwei parallel zueinander verlaufenden Rotoren 52 und 54, die von einem Gehäuse 56 umgeben werden. Die Rotoren 52 und 54 sind einander gleich und über ihre Länge in einen Einzugsteil, einen Trennteil und einen Abgabeteil 52a, 52b, 52c und 54a, 54b, 54c aufgeteilt. Der größere Teil eines jeden Rotors 52 bzw. 54 ist in je einem getrennten Trenngehäuse 58 bzw. 60 angeordnet, wobei die Trenngehäuse 58 bzw. 60 die Rotoren zylinderförmig umgeben. Am stromabwärts liegenden Ende weisen die Trenngehäuse 58 bzw. 60 je einen Gehäuseauslaßteil 62 bzw. 64 mit je einer Auslaßöffnung auf (siehe Fig. 6). Der Einzugsgehäuseteil 66 weist keine Unterteilung auf. Am vorderen Ende des Einzugsgehäuseteils 66 befindet sich ein Einzugskanal 68, der im Querschnitt im wesentlichen rechteckförmig ausgebildet ist und lediglich im Bereich des Bodens 70 Bogenteile 72 und 74 aufweist. Die gekrümmten Bogenteile 72 und 74 liegen Zwischen dem im wesentlichen horizontal verlaufenden Boden und den beiden sich daran anschließenden vertikal verlaufenden Wänden 76 und 78. Die Wände 76 und 78 sind mittels einer oberen Wand 80 miteinander verbunden. An die vordere Stirnkante des Bodens 70 schließt sich eine quer verlaufende Stirnwand 82 an, die sich zwischen den beiden vertikal verlaufenden Wänden 76 und 78 bis in etwa zur Mitte erstreckt und somit das untere Ende einer rechteckförmigen EinlaßÖffnung 84 begrenzt (siehe Fig. 2 und 3). Der Gesamtquerschnitt des Einzugsgehäuseteils 66 ist etwas größer als der Gesamtquerschnitt der beiden an den Einzugsgehäuseteil 66 anschließenden Trenngehäuse 58 und 60. Gebogenen und geneigt verlaufende, sich nach hinten konisch verjüngenden Verbindungskanalteile 90 und 92 erstrecken sich zwischen der oberen Wand 80 sowie den Seitenwänden 76 und 78 und den vorderen Ecken der Trenngehäuse 58 und 60. Im Bereich der Mittelebene der Trennvorrichtung befinden sich ebenfalls zwei Verbindungskanalteile 94 und 96, die ebenfalls die Trenngehäuse 58 und 60 mit der oberen Wand 80 verbinden, so daß das aus dem Einzugskanal 68 kommende Erntegut über die konischen Verbindungskanalteile 90 bis 96 den getrennten, nebeneinander liegenden Trenngehäusen 58 und 60 zugeführt werden kann. Um eine Aufteilung des Erntegutstromes aus dem Einzugskanal 68 vorzunehmen, ist zwischen den beiden Trenngehäusen 58 und 60 eine Trennleiste 98 vorgesehen, die auf der Längsmittelebene des Gehäuses 56 liegt. Das stromabwärts liegende Ende des Bodens 70 ist durch eine Rückwand 100 begrenzt, die aus einem linken und rechten kreisförmigen, den Außendurchmessern des nachgeschalteten Trennsiebe 108 angepaßten Segment 104 und 106 gebildet ist, die durch ein Mittelstück 102 miteinander verbunden sind. Die beiden Segmente 104 und 106 gehen jeweils in den Bogenteil 72 über, der zwischen der Innenoberfläche des Bodens 70 und der Innenoberfläche des Trennsiebes 108 und 110 gebildet ist.

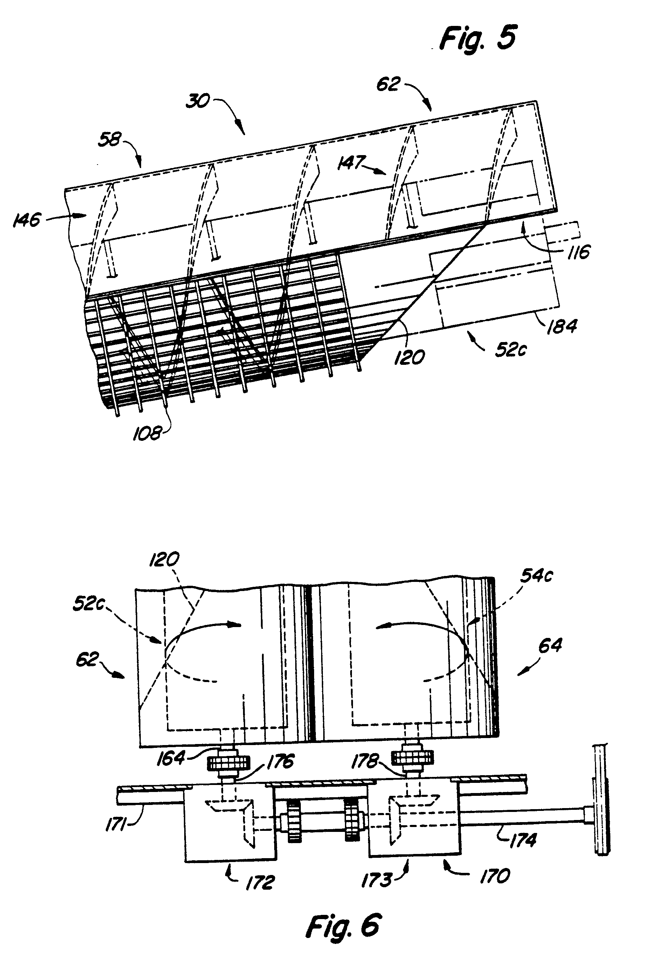

Die Trenngehäuse 58, 60 bestehen aus den beiden nebeneinander angeordneten Trennsieben 108, die sich über die gesamte Länge der Trennvorrichtung 30 erstrecken und beide in Form einer Halbschale gebildet sind. Die beiden Trennsiebe 108 werden mittels je einer oberen halbkreisförmig ausgebildeten Gehäusehälfte 112 und 114 abgedeckt, die beispielsweise aus einem Metallblech gebildet sein könnnen. Wie aus Fig. 5 hervorgeht, weisen die Gehäuseauslaß. Teile 62 bzw. 64 nach unten gerichtete Auslaßöffnungen 116 auf, wobei jede Auslaßöffnung 116 mit einer Leitvorrichtung 120, ausgestattet ist, die den äußeren unteren Quadranten des Trenngehäuses 58, 60 abdeckt und von der unteren Kante des Trennsiebes 108 zum hinteren Ende des Trenngehäuses 56, 58 sich verjüngt.

Die beiden nebeneinander parallel verlaufenden Trennvorrlchtungen 30 sind einander gleich, so daß in der nachfolgenden Beschreibung lediglich eine Trennvorrichtung weiter erläutert ist. Zahlreiche spiralförmig verlaufende Führungselemente sind im Trenngehäuse 56 bzw. 58 angeordnet, die, wie aus Fig. 2 hervorgeht, als ein schmales Band bzw. als Führungsrippen 130, 140, 142, 144, 146 ausgebildet sein können. Die einzelnen Führungsrippen 130 bis 146 sind, wie aus Fig. 2 hervorgeht, mit Bezug auf die Innenoberfläche des Bodens 70 bzw. der Gehäusehälfte 112 und 114 rechtwinklig angeordnet, wobei die innenliegende Kante der entsprechenden Führungsrippe fest mit dem Boden bzw. der Gehäusehälfte verbunden ist. Wie aus Fig. 3 und 4 hervorgeht, ist die Führungsrippe 130 im Einzugsgehäuseteil 66 angeordnet und besteht aus einem Bodenrippenteil 132 und einem gebogenen Rippenteil 134, der sich im unteren rechten Quadranten befindet. Die Führungsrippe 130 weist im Bereich des Bodens eine gleichbleibende Höhe auf und verläuft spiralförmig in den oberen äußeren Quadranten. Der obere Teil 136 der Führungsrippe 130 nimmt in der Höhe zu (siehe Fig. 3), so daß die innere Kante 138 der Führungsrippe 130 konzentrisch zum Rotor 52 verläuft. Die zweite nachgeordnete Führungsrippe 140 ist ähnlich wie die erste Führungsrippe 130 ausgebildet. Die zweite Führungsrippe 142 erstreckt sich etwas in das Trenngehäuse 58 bzw. 60.

Im Trenngehäuse 58 sind alle Führungsrippen gleich, jedoch weist die dritte Führungsrippe 144 in etwa den gleichen Steigungswinkel auf wie die vorderen Führungsrippen 130 und 140. Jedoch ist dieser Steigungswinkel größer als der Steigungswinkel der nachfolgenden Führungsrippen 146 und 147 im Bereich des hinteren Gehäuseauslaßteiles 62, 64. Die dritte Führungsrippe 144 beispielsweise besteht aus einem unteren und oberen Teil 148, 150 mit unterschiedlicher Höhe. Swenkerteil ist die Führungsrippe 144 überspannt das Trennsieb 108 über einen Winkel von 180°. Die Führungsrippe 144 weist am Anfang des unteren Teils 148 die kleinste und am Ende des oberen Teils 150 die größte Höhe auf; sie liegt im Bereich des oberen Totpunktes des Gehäuses, wobei die innere Kante 152 der oberen Teils 150 der Führungsrippe 144 in etwa konzentrisch zum Rotor 52 verläuft.

Die Rotoren 52 und 54, (beispielsweise der linke Rotor 52 gemäß Fig. 7) mit Rotorrahmen 160 erstrecken sich über die gesamte Länge des Gehäuses 56 und weisen je einen vorderen und hinteren Zapfen 162, 164 auf, mittels derer der Rotor im Trenngehäuse 58, 60 vertikal nach unten versetzt gelagert ist. Der vordere Zapfen 162 ist in einem Lager 166 aufgenommen, das an einem Rahmenteil 168 des Gehäuses 10 befestigt ist. Am hinteren Ende des Rotors befindet sich eine Antriebsvorrichtung 170, die von einem quer verlaufenden Rahmenteil 171 aufgenommen ist. Die Antriebsvorrichtung 170 weist ein rechtes und linkes Getriebegehäuse 173, 172 auf, deren Getrieberäder mittels einer Antriebswelle 174 angetrieben werden. Am rechten Ende der Antriebswelle 174 befindet sich eine Zugmittelscheibe, die mit dem Hauptantrieb des Mähdreschers verbindbar ist. Die Antriebswelle 174 steht über Kegelräder mit zwei sich in Axialrichtung der Rotoren 52 und 54 erstreckenden Wellenzapfen 176, 178 in Antriebsverbindung, die wiederum mit den Zapfen 164 über je eine Kupplung antriebsmäßig verbunden sind. Die beiden Rotoren werden mittels der im Getriebegehäuse 172, 173 vorgesehenen Kegelräder gleichmäßig schnell angetrieben.

Der Rotorrahmen 160 eines jeden Rotors 52 ist weist einen rechteckförmigen Querschnitt auf und besteht aus vier sich über die gesamte Länge erstreckenden Vierkantrohren 180, wobei ein jedes Vierkantrohr 180 in einer Ecke angeordnet ist. Die vier Vierkantrohre 180 sind durch Tragplatten 182 miteinander verbunden. Am stromabwärts liegenden Ende der einzelnen Vierkantrohre 180 befinden sich Flügelräder 184, die sich radial erstrecken.

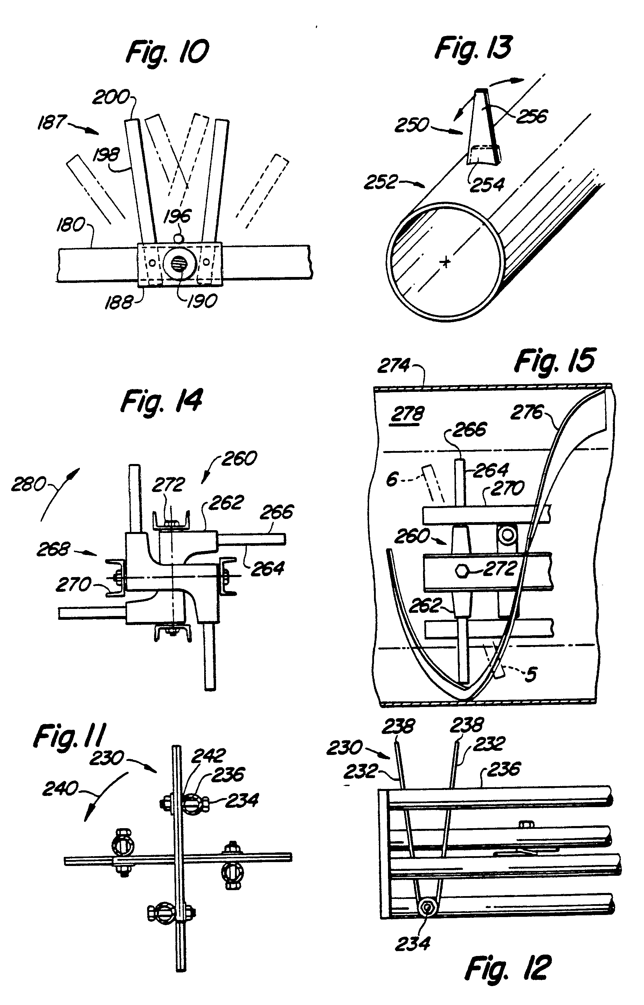

Zwischen den einzelnen Vierkantrohren 180 sind zahlreiche Förderelemente beweglich gelagert sind wo Förderelemente 186 im Einzugsteil 52a, und Ferderelemente 187 im mittleren Trennteil 52b, die sich bis in den Abgabeteil 52c erstreckenden. Ein jedes Förderelement 186 ist in einer Fingerhalterung 188 befestigt, die an die jeweils nebeneinander liegenden Vierkantrohre 180 über einen Gelenkzapfen 190 beweglich angeschlossen sind. Die Fingerhalterung 188 kann mittels einer einen geringen Reibungswiderstand aufweisenden Buchse auf dem Gelenkzapfen 190 beweglich bzw. schwenkbar angeordnet sein, so daß das Förderelement um eine Achse schwenkt, die rechtwinklig zur Drehachse 191 des Rotors 52 verläuft. Von einer jeden Fingerhalterung 188 erstreckt sich ein erster und zweiter Finger 192 radial nach außen, wobei die einzelnen Finger 192 endseitig ein wenig auseinander laufen. Ein jeder Finger 192 weist eine Fingerspitze 194 auf. Ein jedes Förderelement 186 kann in einem bestimmten Bereich frei schwenken, wobei der Schwenkbereich durch einen Anschlag 196 begrenzt wird, der mit der Fingerhalterung 188 verbunden ist und der beim Schwenkvorgang gegen die Oberfläche des entsprechenden Vierkantrohres 180 zur Anlage kommt. Der Schwenkbereich der Finger 192 ist in Fig. 10 angedeutet.

Der Trennteil 52b und der Abgabeteil 52c sind in etwa gleich dem Einzugsteil 52a, jedoch mit der Ausnahme, daß der Finger 198 mit seiner Fingerspitze 200 im Bereich des Abgabeteils etwas kürzer ist als die übrigen Finger. Wie aus Fig. 7 hervorgeht, sind die einzelnen Förderelemente 186 und 187 mit Bezug auf den Rotorrahmen 160 auf einer Schnekkenlinie angeordnet. Die Schneckenwendel verläuft entgegengesetzt zu einer Schneckenwendel eines Schneckenförderers, der dann ebenfalls rückwärts fördern würde, wenn er in die gleiche Richtung gedreht würde wie der beschriebene Rotor. Die Anordnung der einzelnen Förderelemente des parallel dazu verlaufenden Rotors 54 ist gleich.

Wenn im Arbeitseinsatz der Mähdrescher über das Feld fährt, so wird das Erntegut über die Erntebergungsvorrichtung aufgenommen und in die Dreschzone 24 abgegeben. In der Dresch-Zone 24 findet ein großer Teil der Trennung des Erntegutes aus dem Stroh statt, so daß ein großer Teil des ausgedroschenen Erntegutes bzw. der Körner durch die Durchlaßöffnungen des Dreschkorbes 28 wandert. Ein großer Anteil des ausgedroschenen Strohs sowie der darin noch enthaltenen Körner sowie Kaff wandert über die Dreschzone 24 hinaus zur Trennvorrichtung 30. Die Fördertrommel 48 hinter der Dreschtrommel 26 dreht sich gemäß Pfeil 210 in gleich Drehrichtung wie die Dreschtrommel (siehe Fig. 2) und verhindert dadurch die Tendenz, daß Erntegut mittels der Dreschtrommel 26 über die Fördertrommel hinaus weitergefördert wird und somit erneut in den Dreschkorb 28 gelangt. Durch die Fördertrommel 48 wird ferner sichergestellt, daß das Erntegut zur Strohleittrommel 44 gelangt, die unter Zuhilfenahme der Führungsplatte 46 in Pfeilrichtung 212 Erntegut von oben her in den Einzugskanal 68 eingibt und somit den Einzugsteilen 52a und 54a zuführt.

Die relativ hohe Anordnung der Strohleittrommel 44 und der oberen Wand 80 oberhalb der Rotoren 52 und 54 in Verbindung mit den vertikal verlaufenden Seitenwänden 76, 78 schafft eine optimale Zuführzone für die Strohleittrommel 44, so daß das Erntegut die Strohleittrommel verläßt, ohne daß Rückstände zurückbleiben. Die geneigt verlaufende Anordnung der oberen Wand 80 sowie der konische Verlauf der Verbindungskanalteile 90 bis 96 unterstützt die positive Förderwirkung für das Erntegut in Richtung des Spaltes 214 Zwischen den Rotoren 52 und 54 und dann nach hinten. Die relativ langen Finger 192 der Einzugsteile 52a und 54a verbessern den Wirkungsgrad des Rotors bezüglich der Aufnahme des Erntegutes und den rückwärtigen Gradlinien-Transport von der Strohleittrommel 44 sowie die Teilung und Umformung des Erntegutes in zwei entgegengrsetztdrehende ringförmige Gutmatten, wenn das Erntegut in den Einzugsgehäuseteil 66 gelangt. Die Rotoren 52 und 54 arbeiten mit normaler Dreh-Zahl, wobei die anfänglich noch nicht in das Erntegut eingetauchten Finger allmählich die entsprechende ausgefahrene Stellung einnehmen, in der sie das Erntegut erfassen. Im Spalt 214 zwischen den Rotoren 52 und 54 und in dem Spalt oberhalb der Rotoren wirken die allmählich in das Erntegut eingreifenden Finger in Umfangsrichtung, wenn das Erntegut durch den Spalt gefördert wird und dabei in eine Förderzone 216 gebracht wird, die im Bereich des Bodens 70 zwischen den Rotoren 52 und 54 liegt. Nun kommen die Führungsrippen 130 und 140 zur Geltung und bewirken somit eine Verschiebung des Erntegutes stromabwärts in Richtung des Trennteiles 52b. Die Finger 192 des Rotors sind frei schwenkbar gelagert und bieten nur einen geringen Widerstand in Axialrichtung, so daß sie der Abwärtsbewegung des Erntegutes folgen, wenn sie im Eingriff mit dem Erntegut stehen. Hieraus ergibt sich, daß die Finger 192 einen geringen Abstand zur inneren Kante 152 der Führungsrippen 130, 140 bis 146 aufweisen können (Fig. 3), so daß sie sich berührungsfrei an den Führungsrippen vorbei bewegen und lediglich durch den Erntaguttransport seitlich verstellt werden. Hierdurch wird der Reibungswiderstand zwischen den Führungsrippen 130, 140 bis 146 und den Fingern 192 ausgeschaltet, wobei durch Eintauchen der Finger 192 in das Erntegut der Trennvorgang der Körner von dem Stroh in vorteilhafter Weise unterstützt wird. Die Finger 192 werden mittels des Rotorrahmens 160 gemäß Pfeilrichtung (Fig. 3) gegenläufig angetrieben und bewegen dadurch das Erntegut in die obere Hälfte des Trenngehäuses 58, 60, in der es dann mittels der Führungsrippen 130, 140 bis 146 stromabwärts bewegt wird. Das Erntegut wird dabei flockenartig aufgelockert, so daß die Trennung weiterhin verbessert werden kann. Wie am besten aus Fig. 2 hervorgeht, erstrecken sich die Führungsrippen 130, 140 in den Einzugsbereich des Trenngehäuses, so daß das Erntegut, nachdem es die Führungsrippe 140 passiert hat, gleichmäßig in den Einlaßspalt bzw. Ringspalt eingezogen wird, wobei die Verbindungskanalteile 90, 92, 94 und 96 den Fördervorgang positiv unterstützen (Fig. 2, 3, 4). Der an sich passive Rotor 52 bzw. 54 wirkt mit der Gehäuseinnenoberfläche des Trenngehäuses 56, 58 sowie mit den spiralförmig verlaufenden Führungsrippen 130, 140 bis 146 im wesentlichen über die gesamte Länge der Trennvorrichtung zusammen. Dieses positive Zusammenwirken zwischen den Rotoren 52 und 54 und den Trenngehäusen 58 und 60 ist nachfolgend näher erläutert.

Die abgesetzte Ausbildung des Einzugsteiles 52a gestattet die Verwendung längerer Finger 192 im Einzugsbereich. Insbesondere im unteren Teil des Einzugsgehäuseteils 66 (siehe Fig. 3). Kann der Durchmesser etwas größer sein als der Durchmesser des sich anschließenden Trenngehäuses 58. Die vertikal bzw. rechtwinklig ausgebildete Stufe zwischen dem Einzugsgehäuseteil 66 und dem sich anschließenden Trenngehäuse 58 gestattet also einen größeren Durchmesser der Finger 192 im Einzugsgehäuseteil 66 in etwa über die gesamte Länge des Einzugsgehäuseteils 66. Die Finger 192 am stromabwärts liegenden Ende des Einzugsgehäuseteils 66 sind so ausgebildet und angeordnet, daß sie über die gesamte Länge des Bodens des Einzugsgehäuseteils hinweg kehren und somit den Totraum zwischen dem Boden und den Fingerspitzen auf ein Minimum reduzieren, insbesondere im kritischen Punkt des Eintritts des Erntegutes in das Trenngehäuse 58. Wie insbesondere aus Fig. 3 hervorgeht, verringert sich die Stufe im Bereich des Segmentes 104 im Bereich der vertikalen Seitenwände 76 und 78, so daß das von der Stufe erfaßte Erntegut, sobald es von den Förderrippen erfaßt worden ist, seine stromabwärts gerichtete Bewegung fortsetzt. Wie aus Fig. 2 hervorgeht, reicht die zweite Führungsrippe 140 in das Trenngehäuse 58 und bis in den Wirkungsbereich der ersten Führungsrippe 130 im Einzugsgehäuseteil 66, so daß eine ununterbrochene Führungsoberfläche zur Verfügung steht, zumindest für einen Teil des Erntegutes, so daß es auf einfache Weise in das Trenngehäuse 58 eintreten kann.

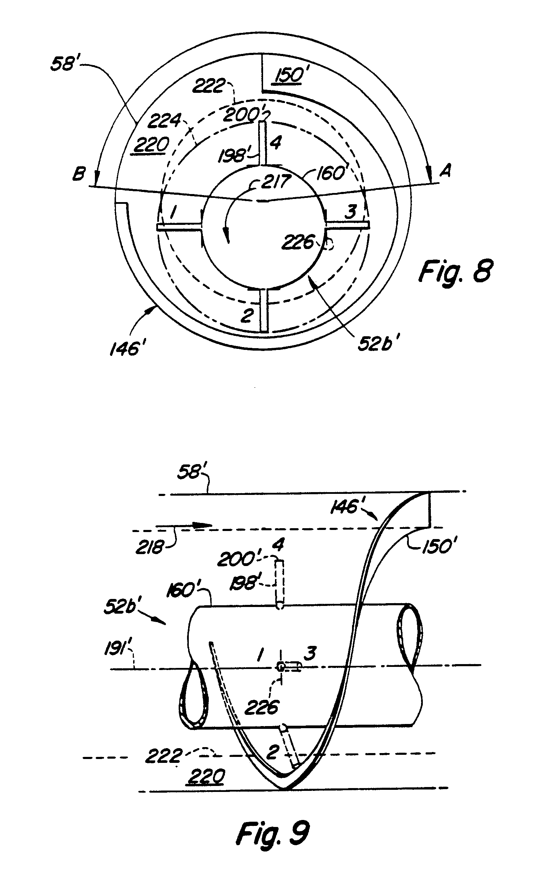

In den Figuren 8 und 9 ist des Trennteil 52b' im Trenngehäuse 58' mit einer schneckenwendelförmigen Führungsrippe 146' vereinfacht dargestellt. Die schematische Darstellung zeigt den Trennteil 52b', der mit einer konstanten Geschwindigkeit angetrieben wird, wobei die Drehrichtung durch den Pfeil 217 gemäß Fig. 8 angedeutet ist. Das Erntegut wird in einer gleichförmigen Gutmatte in Richtung der Auslaßöffnung gefördert. Die Förderrichtung ist durch den Pfeil 218 angedeutet. Der Erntegutstrom als ringförmige Matte ist durch die Bezugszahl 220 angedeutet, wobei die innere Oberfläche der ringförmigen Erntegutmatte 220 durch die Bezugszahl 222 gekennzeichnet ist. Der beweglich angeordnete Finger 198' ist beweglich bzw. gelenkig auf dem Rotorrahmen 160' angeordnet. Ferner ergibt sich aus Fig. 9 die Beziehung des Fingers 198' mit Bezug auf die Förderrippe 146'. Es wird als vorteilhaft angesehen, daß die Zuführgeschwindigkeit des Erntegutes, der Erntegutfluß innerhalb der Trennvorrichtung, der Rotationskreis 224 der Fingerspitzen 200', der innere Durchmesser der Erntegutmatte 220 und der exzentrische Versatz zwischen Rotor und Gehäuse und die Form der Erntegutmatte so gewählt sind, daß Bereiche vorhanden sind, in denen ein Kontakt der Finger 198' mit dem Erntegut hergestellt wird, und ein Bereich vorhanden ist, in dem kein Kontakt der Fingerspitzen 200 mit dem Erntegut besteht. Siehe hierzu insbesondere Fig. 8, aus der deutlich hervorgeht, wie die Finger 198' in die Erntegutmatte 220 eintauchen und wie der Rotationskreis 224 zur inneren Oberfläche 222 der Erntegutmatte verläuft, wobei sich die beiden Kreise teilweise überlappen. Nach diesem Beispiel greifen die Finger zwischen den Punkten A und B über einen Bogenwinkel von weniger als 180° nicht in das Erntegut ein und haben auch über 360° keinen Kontakt mit der Führungsrippe.

Wenn die Finger 198' keinen Kontakt mit der Erntegutmatte 220 haben, können die Finger 198' lediglich um die Achse 226 schwenken, die rechtwinklig zur Drehachse 191' verläuft (Fig. 9). Infolge der Zentrifugalkräfte können sich dabei die Finger 198', nachdem sie aus dem Erntegut herausgezogen sind, radial ausrichten (siehe Position 4 in Fig. 8 und 9). Die Finger 198' selbst übermitteln nur einen Zentrifugalimpuls auf die Erntegutmatte 220, wobei jedoch bei Kontaktaufnahme der Finger 198' mit der Erntegutmatte 220 am Punkt B das Erntegut mittels der Finger in Umfangsrichtung bewegt wird, wobei die Führungsrippen 146' den Erntegutransport unterstützen (siehe Position 1 in Fig. 8). Aufgrund der Exzentrizität des Rotors 52' mit Bezug auf das Trenngehäuse 58' sowie des kurzen Abstandes der Finger zu den Führungsrippen 146' wird das Einwirken der Finger in die Erntegutmatte 220 vergrößert, wobei sich die Finger zwischen der Position 1 und 2 bewegen. Da die Finger entweder durch direkten Kontakt mit den Führungsrippen oder über indirekten Kontakt mittels des Erntegutes seitlich bewegt werden, wird das Erntegut ebenfalls mittels der Finger stromabwärts bewegt, wobei die Zentrifugalkräfte durch diesen Bewegungsimpuls nach rechts überlagert werden. Dieser Bewegungseffekt hält an, solange der Rotor die Finger zwischen der Position 2 und 3 bewegt. Zwischen der Position 3 und 4 werden die Finger allmählich wieder aus der Erntegutmatte 220 herausgezogen, bis die Finger dann wieder bei der Position 1 allmählich wieder in die Erntegutmatte eintauchen.

Die Führungsrippe 146' nimmt an Höhe allmählich zu. Der obere Teil 150' der Führungsrippe 146' weist die größte Höhe auf. Im oberen Quadranten des Trenngehäuses 58' unterstützt insbesondere dieser Teil 150' die spiralförmige Bewegung der Erntegutmatte, die sich aufgrund des durch die Finger 198' ausgelösten Bewegungsimpulses weiterbewegt. Die höher werdenden Führungsrippen 146' unterstützen also den Erntegutfluß zur Austragöffnung, wobei ein geringer Geschwindigkeitsabfall dazu beiträgt, daß das Erntegut sich zwischen der Zone A und B ein wenig von der Gehäusewand weg bewegt, d. h. flockenartig auflockert. Das Wegbewegen der Erntegutmatte von der Gehäusewand führt ferner zu einer gewissen ungleichmäßigen Strömung des Erntegutes bzw. zu einer Turbulenz, wodurch die Trennwirkung ferner gesteigert wird. Der radiale Zwischenraum zwischen den Fingern und den Führungsrippen soll in der Zone zwischen den Positionen 1 und 3 so klein wie möglich gehalten werden.

Die Trennvorrichtung kann so ausgebildet sein, daß die Förderelemente bzw. die zugehörigen Finger 198' mit Bezug auf die Förderrippe 146' etwas axial versetzt sind (siehe hierzu Fig. 9). Jedoch ist nach der vorliegenden Erfindung die Anzahl der Finger so, daß sie dicht nebeneinander stehen und einen ausreichenden Abstand untereinander aufweisen, um eine wirkungsvolle Förderung des Erntegutes in Umfangsrichtung und stromabwärts zu gewährleisten, wobei ständig ein Erntegutkontakt der Finger mit dem Erntegut aufrechterhalten wird, wenn der Rotor eine bestimmte minimale Drehgeschwindigkeit aufweist, wobei die Führungsrippen 146' eine seitliche Verstellung der Finger mittelbar bewirken, unabhängig davon, wie die Finger gegenüber den Führungsrippen angeordnet bzw. versetzt sind. Die Verschwenkung der Finger 198' in Abhängigkeit von den Führungsrippen 146' kann variieren, und zwar in Abhängigkeit von der Position der Finger mit Bezug auf die Führungsrippen, und zwar dann, wenn die Finger in das Erntegut eingetaucht sind. Jedoch kann ein jeder Finger 198' während des normalen Arbeitseinsatzes und während eines Teils seiner Umdrehung um die Achse 191 bzw. 191' des Rotors 52 bzw. 52' frei schwenken und somit der Bewegung des Erntegutstromes folgen, wobei die Zentrifugalkräfte bewirken, daß die Finger 198' sich wieder radial ausrichten, insbesondere wenn sie sich aus der Erntegutmatte herausbewegt haben.

Die Trennvorrichtung weist eine derartige Länge auf, daß das Erntegut lange genug in Kontakt mit den Trennsieben bleibt, um eine ausreichende Ausscheidung, beispielsweise aus den Ähren, zu gewährleisten.

Wie aus Fig. 5 hervorgeht, reicht zumindest ein Teil der Führungsrippe 147 in den hinteren Gehäuseauslaßteil 62. In den Gehäuseauslaßteil 62 erstrecken sich ferner die Förderelemente 187, so daß eine axiale Bewegung bis in diesen Bereich und ein gleichmäßiger Austrag des ausgedroschenen Strohs gewährleistet wird, ohne daß in diesem Bereich ein Gutstau auftritt. Die Leitvorrichtung 120 unterstützt dabei den wirkungsvollen Austrag des Strohs in Richtung der Häckselvorrichtung 40.

Die spiralförmige Anordnung der Förderelemente 187 auf den Rotoren 52 und 54 bewirkt eine gleichmäßige Förderung des Erntegutes unter Vermeidung von Drehmomentenspitzen im Vergleich zu Rotoren, die lediglich mit zwei oder mehreren diametral angeordneten Förderelementen ausgerüstet sind. Die gegenläufige Anordnung der Spirale der Förderelemente vermindert die Tendenz eines Aufwickelns des Erntegutes, wenn die Förderelemente in das Erntegut eingreifen, um dieses stromabwärts spiralförmig weiter zu bewegen.

Wie aus Fig. 2 hervorgeht, kann der Steigungswinkel der Förderrippen 140 bis 147 entsprechend der Funktion der Rotoren 52 und 54 verändert werden. Die Führungsrippen 130 und 140 im Einzugsteil 52a sowie die Führungsrippe 144 im vorderen Bereich des Trennteiles 52b weisen einen relativ steilen Steigungswinkel von ca. 30° auf, während der Rest der Führungsrippen 146 einen kleineren Steigungswinkel von ca. 14° aufweist. Der steile Steigungswinkel im Einzugsteil 52a und im vorderen Trennteil 52b kompensiert insbesondere anfänglich den etwas geringeren positiven Bewegungsvorgang des Erntegutes, insbesondere im Übergangsbereich zwischen der Dreschtrommel 26 und dem Einzugsgehäuseteil 66 und dann, wenn das Erntegut im Einzugsgehäuseteil getrennt wird. Der Steigungswinkel der Führungsrippen im Einzugsgehäuseteil 66 ist so gewählt, daß das Erntegut bei einer Umdrehung den Führungsrippen folgt und dann in den Trennteil 52b eintritt. Die unterschiedlichen Steigungswinkel innerhalb der Trennvorrichtung 30 gewährleisten somit einen gleichmäßigen Erntegutfluß, ohne daß ein Gutstau im vorderen Bereich der Trennvorrichtung auftritt.

Der gleichmäßige Antrieb der beiden Rotoren 52 und 54 mittels der Antriebsvorrichtung 170 gemäß Fig. 6 gestattet eine gleichmäßige Aufnahme des Erntegutes in dem Spalt 214 zwischen den Rotoren 52 und 54 im Einzugsgehäuseteil 66. Gemäß Fig. 3 sind die Rotoren 52 und 54 gegeneinander um 45° phasenverschoben, um somit die Aggressivität der Aufnahme des Erntegutes im Bereich des Spaltes 214 zu verbessern.

In den Figuren 11 bis 16 sind ein weiteres Ausführungsbeispiele des Rotors dargestellt. Das Ausführungsbeispiel gemäß Fig. 11 und 12 ist ähnlich dem ersten Ausführungsbeispiel. Ein jedes Förderelement 230 weist zwei gabelförmige Finger 232 auf, die auf einer Achse 234 gemeinsam schwenkbar gelagert sind. Die sich axial erstreckenden Rohrträger 236 sind über Rahmenteile miteinander verbunden. Die Förderelemente 230, die an dem Rohrträger 236 schwenkbar gelagert sind, erstrecken sich durch den Rotorrahmen, so daß die Fingerspitzen 238 außerhalb der Rohrträger 236 liegen. Die Achsen 234 sind so angeordnet, daß mit Bezug auf die Drehrichtung gemäß Pfeil 240 die Finger mit ihrer Rückseite 242 gegen die Stirnseite des Rohrträgers 236 anliegen (siehe Fig. 11). Nach diesem Ausführungsbeispiel liegt die Schwenkachse der Finger 232 auf der einen Seite der Rotorachse des Rotors, während die Fingerspitze 238 auf der anderen Seite der Rotorachse ist. Somit ist auch der Schwenkbereich der Finger 232 größer als der Schwenkbereich der Finger 192 qemäß Fig. 7. Da beim Ausbiegen der Finger 232 diese mit ihrer Rückseite gegen den Rohrträger 236 anliegen, wird auf einfache Weise eine kostensparende Befestigung für die Finger geschaffen.

Im Ausführungsbeispiel gemäß Fig. 13 sind die Finger 250 freitragend an die Außenseite des Rotorrahmens 252 ange-Schlossen. Der an den Rotorrahmen 252 fest angeschlossene Finger 250 ist in sich selbst flexibel und besteht aus einem sich nach außen verjüngenden Teil mit einem Gelenkteil 254, der am Rotorrahmen 252 fest angeordnet ist und dessen Querschnitt größer ist als die Fingerspitze 256 des Fingers 250. Der Gelenkteil 254 ist an sich starr, während der sich daran anschließende Teil bzw. die Fingerspitze 256 in einem gewissen Bereich ausschwenken kann, und zwar in Abhängigkeit von dem Kontakt mit der entsprechenden Führungsrippe. Die Schmalseite des Fingers 250 kann, wie aus Fig. 13 hervorgeht, in Drehrichtung ausgerichtet sein. Der Finger 250 selbst besteht aus einem an sich starren Teil, beispielsweise einem Stahlmetallstreifen von gleichmäßiger Stärke, der an den Rotorrahmen 252 mittels eines elastomeren Einsatzes an den Gelenkteil 254 angeschlossen ist, um die notwendige Flexibilität des Fingers 250 zu gewährleisten.

In den Figuren 14 und 15 ist ein viertes Ausführungsbeispiel eines Förderelementes 260 mit einem Gelenkrahmen 262 dargestellt, an dem beiderseits je ein Finger 264 mit je einer Fingerspitze 266 angeschlossen ist. Das Förderelement 260 ist mit dem Rotorrahmen 268 gelenkig verbunden, der aus sich in Längsrichtung erstreckenden U-förmigen Trägern 270 gebildet ist, die durch Schraubenbolzen zusammengehalten werden. Das Förderelement 260 kann zwischen den Trägern 270 mittels einer Achse 272, die dem Schraubenbolzen entspricht, schwenken. In Fig. 15 ist der Rotor in einem Trenngehäuse 274 mit einer Förderrippe 276 zum Teil angedeutet. Die Arbeitsweise beim Arbeitseinsatz des Rotors sowie der Rotationskreis der Fingerspitzen 266 entspricht im wesentlichen der Arbeitsweise und der Funktion der Finger 198' gemäß Fig. 8 und 9. Jedoch sind bei diesem Ausführungsbeispiel die Förderelemente 260 so ausgebildet, daß die gegenüberliegenden Fingerspitzen 266 in der Bewegung voneinander abhängen. Daraus ergibt sich, wie in Fig. 15 angezeigt, daß bei Kontakt der ersten Fingerspitze 266 mit der Erntegutmatte 278 die Fingerspitze in die Position 5 gemäß Fig. 15 verstellt wird und zur gleichen Zeit die gegenüberliegende Fingerspitze in die Position 6 verstellt wird, ohne daß diese einen Kontakt mit dem Erntegut in dieser Stellung hat. Durch das Zurückschwingen des gegenüberliegenden zur Zeit nicht im Eingriff befindlichen Fingers über einen großen Stellbereich wird auch die Eintauchphase der Fingerspitze in das Erntegut vergrößert. Die Drehrichtung der Finger ist in Fig. 14 durch den Pfeil 280 angedeutet. Obwohl die Finger 264 mit Bezug auf die Drehachse rechtwinklig angeordnet sind, sind sie jedoch nach vorne geneigt verlaufend ausgebildet. Dies kann bei manchen Arbeitseinsätzen von Vorteil sein, obwohl die radiale Erstreckung der Finger normalerweise bevorzugt wird (siehe Fig. 8).

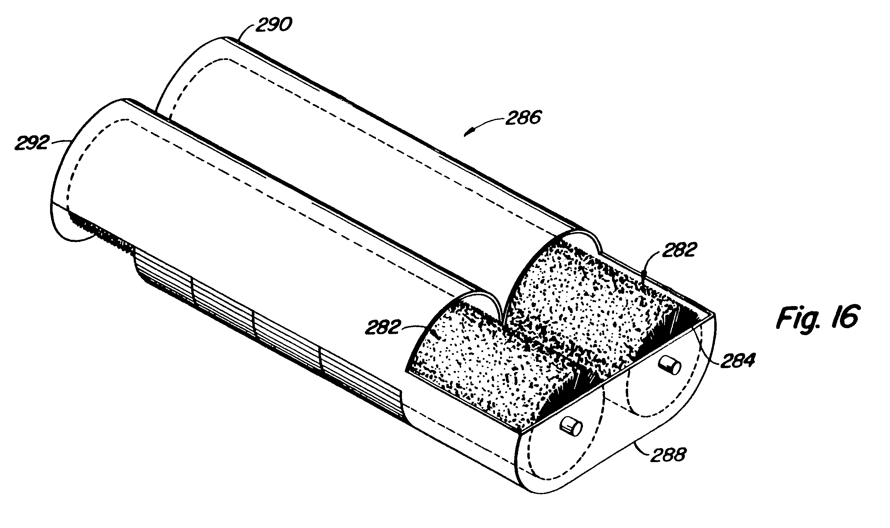

Im Ausführungsbeispiel gemäß Fig. 16 bestehen die Rotoren aus zwei nebeneinander liegenden Bürsten 282, die aus federelastischen Fingern bzw. Borsten 284 gebildet sind. Die einzelnen Borsten 284 liegen dicht nebeneinander. Die beiden Rotoren sind im Trenngehäuse 286 angeordnet, das aus einem Aufnahmeteil 288, einem Trennteil sowie einem Abgabeteil 290, 292 gebildet ist.

## Patentansprüche

1. Mähdrescher mit einer nach dem Axialflußprinzip arbeitenden Trennvorrichtung (30) mit mindestens einem einen um eine Drehachse (191) umlaufenden Rotor (52, 54) aufweisenden Trenngehäuse (58, 60), wobei jeder Rotor (52, 54) einen Rotorrahmen (160, 160', 252, 268) und zahlreiche sich davon nach außen zum Trenngehäuse (58, 60) hin erstreckende Finger (192, 198, 198', 232, 250, 264, 284) aufweist, die Finger (192, 198, 198', 232, 250, 264, 284) Erntegut in Form einer Erntegutmatte (220) mit Unterstützung von im Trenngehäuse (58, 60) schraublinienförmig angeordneten Führungsrippen (130, 140 bis 147) durch einen zwischen dem Rotorrahmen (160, 160', 252, 268) und dem Trenngehäuse (58, 60) gebildeten Ringspalt in Umfangsrichtung schraublinienförmig stromabwärts bewegen und derart auf dem Rotor (52, 54) angeordnet sind, daß sie durch auf sie einwirkende Kräfte aus einer zum Trenngehäuse (58, 60) gerichteten ersten Stellung heraus in Richtung der Drehachse (191) des Rotors (52, 54) ausbiegbar oder verschwenkbar sind, dadurch gekennzeichnet, daß die Drehachse (191) des Rotors (52, 54) mit Bezug auf die Längsachse des Trenngehäuses (58, 60) derart radial versetzt ist, daß die Finger (192, 198, 198', 232, 250, 264, 284) nur in einem Bereich auf einer Seite des Trenngehäuses in die Erntegutmatte (220) eintauchen und dabei durch die sich stromabwärts bewegende Erntegutmatte ausgebogen oder verschwenkt werden.

2. Mähdrescher nach Anspruch 1, dadurch gekennzeichnet, daß die Finger (192, 198, 198', 232, 250, 264, 284) derart auf dem Rotor (52, 54) angeordnet sind, daß sie sich bei Herausnahme aus der Erntegutmatte (220) mittels der Zentrifugalkräfte wieder in ihre erste Stellung zurückbewegen.

3. Mähdrescher nach Anspruch 1 oder 2, dadurch gekennzeichnet, daß die Finger (192, 198, 198', 232, 250, 264, 284) bei Drehung des Rotors (52, 54) und vorwiegend durch Eintauchen in die Erntegutmatte stromabwärts verschwenkbar sind und einen derart großen Abstand zu den Führungsrippen (130, 140 bis 147) aufweisen, daß sie sich berührungsfrei an den Führungsrippen vorbei bewegen.

4. Mähdrescher nach einem oder mehreren der vorherigen Ansprüche, dadurch gekennzeichnet, daß die Finger (192, 198, 198', 232, 264) derart beweglich auf dem Rotor (52, 54) angeordnet sind, daß sie sich in einer Ebene verschwenken lassen, die parallel zur Drehachse (191) des Rotors (52, 54) verläuft.

5. Mähdrescher nach einem oder mehreren der vorherigen Ansprüche, dadurch gekennzeichnet, daß der zwischen dem Rotor (52, 54) und der Innenoberfläche des Trenngehäuses (58, 60) gebildete Ringspalt eine unterschiedlich starke radiale Ausdehnung aufweist.

6. Mähdrescher nach einem oder mehreren der vorherigen Ansprüche, dadurch gekennzeichnet, daß alle Finger (192, 198, 198', 232, 250, 264, 284) mit Bezug auf die Drehachse (191) des Rotors (52, 54) hintereinander auf einer spiralförmig verlaufenden Linie angeordnet sind.

7. Mähdrescher nach einem oder mehreren der vorherigen Ansprüche, dadurch gekennzeichnet, daß das Trenngehäuse (58, 60) zumindest einen Teil mit Durchlaßöffnungen aufweist und die Finger (192, 198, 198', 232, 250, 264, 284) derart auf dem Rotor (52, 54) angeordnet sind, daß sie sich bei Herausnahme aus der Erntegutmatte (220) auf einem Kreisbogen bewegen, der in etwa rechtwinklig zur Drehachse (191) des Rotors (52, 54) verläuft.

8. Mähdrescher nach einem oder mehreren der vorherigen Ansprüche, dadurch gekennzeichnet, daß ein jeder Finger (250) federelastisch ausgebildet und freitragend auf dem Rotor (52, 54) fest angeordnet ist.

9. Mähdrescher nach einem oder mehreren der vorherigen Ansprüche, dadurch gekennzeichnet, daß die Finger in Form von Borsten (284) derart dicht nebeneinander angeordnet sind, daß sie eine zylindrische Bürste (282) bilden.

10. Mähdrescher nach Anspruch 8, dadurch gekennzeichnet, daß ein jeder Finger (250) in Axialrichtung federelastischer ausgebildet ist als in Umfangsrichtung des Rotors (52, 54).

11. Mähdrescher nach einem oder mehreren der vorherigen Ansprüche, dadurch gekennzeichnet, daß jeder Rotor (52, 54) zahlreiche als Anschläge (196) ausgebildete Widerlager aufweist, wobei jedes Widerlager die Schwenkbewegung zumindest eines Fingers (198) begrenzt, während die Längsachsen zweier nebeneinander liegender Finger (198) divergierend verlaufend angeordnet sind.

12. Mähdrescher nach einem oder mehreren der vorherigen Ansprüche, dadurch gekennzeichnet, daß die Schwenkachse der Finger (192) zwischen der Drehachse (191) des Rotors (52, 54) und der Spitze (194) der Finger liegt.

13. Mähdrescher nach einem oder mehreren der vorherigen Ansprüche, dadurch gekennzeichnet, daß die Schwenkachse der Finger (232) auf der einen Seite der Drehachse (191) des Rotors (52, 54) und die Fingerspitze (238) auf der anderen Seite der Drehachse liegt.

14. Mähdrescher nach einem oder mehreren der vorherigen Ansprüche, dadurch gekennzeichnet, daß die Finger (192) auf dem Rotor (52, 54) in Gruppen angeordnet sind und daß eine jede Gruppe zumindest zwei mit axialem Abstand angeordnete Finger (192) aufweist.

15. Mähdrescher nach einem oder mehreren der vorherigen Ansprüche, dadurch gekennzeichnet, daß die schwenkbar am Rotorrahmen (268) gelagerten Finger (264) sich beiderseits der Drehachse radial erstrecken und daß bei Verschwenkung des einen Fingers in eine Richtung der andere Finger entgegengesetzt dazu zwangweise verschwenkt wird.

16. Mähdrescher nach Anspruch 15, dadurch gekennzeichnet, daß ein jedes Paar der sich in entgegengesetzter Richtung erstreckenden Finger (264) an eine gemeinsame Achse (272) angeschlossen ist.

17. Mähdrescher nach Anspruch 16, dadurch gekennzeichnet, daß die gemeinsame Achse (272) der Finger (264) die Drehachse (191) des Rotors (52, 54) in einem rechten Winkel schneidet.

18. Mähdrescher nach Anspruch 16, dadurch gekennzeichnet, daß jeder Finger (264) eines Fingerpaares sich in etwa rechtwinklig zur gemeinsamen Schwenkachse (272) und beiderseits der Drehachse des Rotors (52, 54) erstreckt.

19. Mähdrescher nach einem oder mehreren der vorherigen Ansprüche, dadurch gekennzeichnet, daß das Trenngehäuse (58, 60) im wesentlichen zylinderförmig ausgebildet und die Drehachse (191) des Rotors (52, 54) derart exzentrisch im Trenngehäuse angeordnet ist, daß der radiale Abstand zwischen dem Rotor und dem Trenngehäuse zwischen einem Minimum und einem Maximum variiert, wobei die Lage des minimalen Abstandes der Zone entspricht, in der die Finger (192) am tiefsten in das Erntegut eintauchen.

20. Mähdrescher nach einem oder mehreren der vorherigen Ansprüche, dadurch gekennzeichnet, daß der Abschnitt des Trenngehäuses (58, 60), der mit Durchlaßöffnungen Versehen ist, von dem Arbeitsbereich der Finger (192, 198, 198', 232, 250, 264, 284) überlappt wird, in den die Finger in das Erntegut eintauchen.

21. Mähdrescher nach einem oder mehreren der vorherigen Ansprüche, dadurch gekennzeichnet, daß die Finger (192, 198, 198', 232, 250, 264, 284) des Rotors (52, 54) und die im Trenngehäuse (58, 60) angeordneten Führungsrippen (130, 140 bis 147) gleichmäßig verteilt im Trenngehäuse (58, 60) angeordnet sind, wobei der axiale Abstand zwischen den Führungsrippenoberflächen größer ist als der axiale Abstand zwischen den Fingern (192, 198, 198', 232, 250, 264, 284).

22. Mähdrescher nach einem oder mehreren der vorherigen Ansprüche, dadurch gekennzeichnet, daß die schneckenförmig verlaufenden Führungsrippen (130, 140 bis 147) in dem Bereich an der Innenseite des Trenngehäuses (58, 60) vorgesehen sind, in dem die Finger (192, 198, 198', 232, 250, 264, 284) in das Erntegut eintauchen, wobei der Eingriffsbereich in etwa 180° überspannt.

23. Mähdrescher nach einem oder mehreren der vorherigen Ansprüche, dadurch gekennzeichnet, daß die schneckenförmig verlaufenden Führungsrippen (130, 140 bis 147) aus sich radial erstreckenden schraubenartigen Bändern gebildet sind, deren Höhe in Drehrichtung zunimmt, wobei die maximale Höhe in einem Bereich liegt, in dem die Finger (192, 198, 198', 232, 250, 264, 284) keinen oder fast keinen Kontakt mit dem Erntegut haben.

24. Mähdrescher nach einem oder mehreren der vorherigen Ansprüche, dadurch gekennzeichnet, daß der Bereich, in dem die Finger (192, 198, 198', 232, 250, 264, 284) in das Erntegut eintauchen, unterhalb der Drehachse (191) des Rotors (52, 54) liegt und daß zumindest ein Teil der Führungsrippen (140 bis 147) sich von diesem Bereich in Umfangsrichtung bis zum oberen Totpunkt des Trenngehäuses (58, 60) erstreckt und von diesem Bereich kontinuierlich an Höhe zunimmt.

25. Mähdrescher nach einem oder mehreren der vorherigen Ansprüche, dadurch gekennzeichnet, daß zwei Trenngehäuse (58, 60) nebeneinander angeordnet und zylinderförmig ausgebildet sind, die über eine quer verlaufende Dreschtrommel (26), eine parallel dazu verlaufende Fördertrommel (48) sowie eine Strohleittrommel (44) mit Erntegut beschickt werden, wobei die Fördertrommel (48) zwischen der Dreschtrommel (26) und der Strohleittrommel (44) angeordnet ist und die Strohleittrommel (44) und die Fördertrommel (48) gegenläufig angetrieben werden.

26. Mähdrescher nach Anspruch 23, dadurch gekennzeichnet, daß ein Einzugsgehäuseteil (66) aus einem in etwa horizontal verlaufenden Boden (70) gebildet ist, der bis zur Mittelebene des Trenngehäuses (58, 60) reicht, wobei zumindest eine Führungsrippe (130) sich diagonal über den Boden (70) des Einzugsgehäuseteils (66) bis zu einer gebogenen seitlichen Wand (76, 78) erstreckt.

27. Mähdrescher nach einem oder mehreren der vorherigen Ansprüche, dadurch gekennzeichnet, daß der Steigungswinkel der Führungsrippe (140) im Einzugsgehäuseteil (66) größer ist als der Steigungswinkel zumindest eines Teils der Führungsrippe (144) im Trenngehäuse (58, 60) bzw. umgekehrt.

28. Mähdrescher nach einem oder mehreren der vorherigen Ansprüche, dadurch gekennzeichnet, daß in einem Gehäuseauslaßteil (62) eines jeden Trenngehäuses (58, 60) zumindest eine spiralförmige Führungsrippe (147) vorgesehen ist.

## Claims

1. Combine harvester with a separator device (30) operating according to the axial flow principle, having at least one separator housing (58, 60) with a rotor (52, 54) rotating about an axis of rotation (191), wherein each rotor (52, 54) comprises a rotor frame (160, 160', 252, 268) and numerous fingers (192, 198, 198', 232, 250, 264, 284) extending outwardly therefrom to the separator housing (58, 60), the fingers (192, 198, 198', 232, 250, 264, 284) moving the harvested material downstream in the form of a harvested material mat (220) with the support of guide ribs (130, 140 to 147) arranged helically in the separator housing (58, 60) through an annular gap formed between the rotor frame (160, 160', 252, 268) and the separator housing (58, 60), and the fingers being so arranged on the rotor (52, 54) that they can be deflected by the forces acting thereon from a first position directed towards the separator housing (58, 60) into the direction of the axis of rotation (191) of the rotor (52, 54), characterized in that the axis of rotation (191) of the rotor (52, 54) is radially displaced relative to the longitudinal axis of the separator housing (58, 60) in such a way that the fingers (192, 198, 198', 232, 250, 264, 284) only dip into the harvested material mat (220) in a region on one side of the separator housing and are thus bent or swung by the downstream moving harvested material mat.

2. Combine harvester according to claim 1, characterized in that the fingers (192, 198, 198', 232, 250, 264, 284) are so arranged on the rotor (52, 54) that they move back to their first position again under centrifugal force on withdrawing from the harvested material mat (220).

3. Combine harvester according to claim 1 or 2, characterized in that the fingers (192, 198, 198', 232, 250, 264, 284) can swing downstream on rotation of the rotor (52, 54) and in particular through dipping into the harvested goods material and have such a large spacing from the guide ribs (130, 140 to 147) that they move past the guide ribs without contact.

4. Combine harvester according to one or more of the preceding claims, characterized in that the fingers (192, 198, 198', 232, 264) are so arranged movably on the rotor (52, 54) that they can swing in a plane which extends parallel to the axis of rotation (191) of the rotor (52, 54).

5. Combine harvester according to one or more of the preceding claims, characterized in that the annular gap formed between the rotor (52, 54) and the inner surface of the separator housing (58, 60) has a radial extent of varying thickness.

6. Combine harvester according to one or more of the preceding claims, characterized in that all fingers (192, 198, 198', 232, 250, 264, 284) are arranged one after the other on a helically running line relative to the axis of rotation (191) of the rotor (52, 54).

7. Combine harvester according to one or more of the preceding claims, characterized in that the separator housing (58, 60) has at least one part with through openings and the fingers (192, 198, 198', 232, 250, 264, 284) are so arranged on the rotor (52, 54) that they move on retracting from the harvested material mat (220) on a circle which runs approximately at right angles to the axis of rotation (191) of the rotor (52, 54).

8. Combine harvester according to one or more of the preceding claims, characterized in that each finger (250) is formed resiliently elactically and is fixedly cantilevered on the rotor (52, 54).

9. Combine harvester according to one or more of the preceding claims, characterized in that the fingers are arranged in the form of bristles (284) close to one another so that they form a cylindrical brush (282).

10. Combine harvester according to claim 8, characterized in that each finger (250) is formed resiliently elastic in the axial direction and in the peripheral direction of the rotor (52, 54).

11. Combine harvester according to one or more of the preceding claims, characterized in that each rotor (52, 54) comprises numerous supports formed as abutments (196), each support limiting the swinging movement of at least one finger (198), while the longitudinal axes of two adjacently lying fingers (198) are arranged divergently.

12. Combine harvester according to one or more of the preceding claims, characterized in that the pivotal axes of the fingers (192) lie between the axis of rotation (191) of the rotor (52, 54) and tips (194) of the fingers.

13. Combine harvester according to one or more of the preceding claims, characterized in that the pivotal axes of the fingers (232) lie to one side of the axis of rotation (191) of the rotor (52, 54) and the finger tips (238) lie to the other side of the axis of rotation.

14. Combine harvester according to one or more of the preceding claims, characterized in that the fingers (192) are arranged on the rotor (52, 54) in groups and in that each group comprises at least two fingers (192) arranged with an axial spacing.

15. Combine harvester according to one or more of the preceding claims, characterized in that the fingers (264) pivotally mounted on the rotor frame (268) extend radially on both sides of the axis of rotation and in that, on swinging of one finger in one direction, the other finger is forceably swung opposite thereto.

16. Combine harvester according to claim 15, characterized in that each pair of fingers (264) extending in opposite directions are connected to a common pivot (272).

17. Combine harvester according to claim 16, characterized in that the common pivot (272) of the fingers (264) intersects the axis of rotation (191) of the rotor (52, 54) at right angles.

18. Combine harvester according to claim 16, characterized in that each finger (264) of a finger pair extends approximately at right angles to the common pivotal axis (272) and to the two sides of the axis of rotation of the rotor (52, 54).

19. Combine harvester according to one or more of the preceding claims, characterized in that the separator housing (58. 60) is formed substantially cylindrically and the axis of rotation (191) of the rotor (52, 54) is so arranged eccentrically in the separator housing that the ·radial spacing between the rotor and the separator housing varies between a minimum and a maximum, wherein the position of the minimum spacing corresponds to the zone in which the fingers (192) dip most deeply into the harvested material.

20. Combine harvester according to one or more of the preceding claims, characterized in that the section of the separator housing (58, 60) which is provided with through openings is overlapped by the working range of the fingers (192, 198, 198', 232, 250, 264, 284), in which the fingers dip into the harvested material.

21. Combine harvester according to one or more of the preceding claims, characterized in that the fingers (192, 198, 198', 232, 250, 264, 284), of the rotor (52, 54) and the guide ribs (130, 140 to 147) arranged in the separator housing (58, 60) are arranged uniformly distributed in the separator housing (58, 60), the axial spacing between the surfaces of the guide ribs being greater than the axial spacing between the fingers (192, 198, 198', 232, 250, 264, 284).

22. Combine harvester according to one or more of the preceding claims, characterized in that the helically running guide ribs (130, 140 to 147) are provided in the region on the inner side of the separator housing (58, 60) in which the fingers (192, 198, 198', 232, 250, 264, 284) dip into the harvested material, the region of engagement extending over approximately 180°.

23. Combine harvester according to one or more of the preceding claims, characterized in that the guide ribs (130, 140 to 147) running helically are formed from radially extending helical bands, whose height increases in the direction of rotation, so that the maximum height lies in a region in which the fingers (192, 198, 198', 232, 250, 264, 284) have no contact or hardly any contact with the harvested material.

24. Combine harvester according to one or more of the preceding claims, characterized in that the region in which the fingers (192, 198, 198', 232, 250, 264, 284) dip into the harvested material, lies beneath the axis of rotation (191) of the rotor (52, 54) and in that at least one part of the guide ribs (140 to 147) extend from this region in the peripheral direction up to the upper dead point of the separator housing (58, 60) and increase continuously in height from this region.

25. Combine harvester according to one or more of the preceding claims, characterized in that the two separator housings (58, 60) are arranged alongside one another and are formed cylindrically, which are fed with harvested material by a transversely extending threshing drum (26), a conveyor drum (48) running parallel thereto and a straw guide drum (44), wherein the conveyor drum (48) is arranged between the threshing drum (26) and the straw guide drum (44) and the straw guide drum (44) and the conveyor drum (48) are driven oppositely.

26. Combine harvester according to claim 23, characterized in that an intake housing part (66) is formed on an approximately horizontally extending bottom (70), which extends up to the centre plane of the separator housing (58, 60), wherein at least one guide rib (130) extends diagonally over the bottom (70) of the intake housing part (66) up to a curved lateral wall (76, 78).

27. Combine harvester according to one or more of the preceding claims, characterized in that the angle of inclination of the guide ribs (140) in the intake housing part (66) is greater than the angle of inclination of at least one part of the guide ribs (144) in the separator housing (58, 60) or conversely.

28. Combine harvester according to one or more of the preceding claims, characterized in that in a housing outlet part (62) of each separator housing (58, 60) there is provided at least one helical guide rib (147).

**Revendications**

1. Moissonneuse-batteuse comportant un dispositif de séparation (30) fonctionnànt selon le principe du flux axial comportant au moins un carter de séparation (58, 60) comportant un rotor (52, 54) tournant autour d'un axe de rotation (191), chaque rotor (52, 54) comportant un bâti de rotor (160, 160', 252, 268) et de nombreux doigts (192, 198, 198', 232, 250, 264, 284) s'étendant de celui-ci vers l'extérieur en direction du carter de séparation (58, 60), les doigts (192, 198, 198', 232, 250, 264, 284) déplaçant des produits de récolte sous la forme d'un tapis de produits de récolte (220) avec l'aide de nervures de guidage (130, 140 à 147) disposées hélicoïdalement dans le carter de séparation (58, 60) hélicoïdalement vers l'aval en direction périphérique à travers un interstice annulaire formé entre le bâti de rotor (160, 160', 252, 268) et le carter de séparation (58, 60), et étant disposés sur le rotor (52, 54) de telle façon qu'ils peuvent, sous l'effet de forces s'exerçant sur eux, se plier ou pivoter en direction de l'axe de rotation (191) du rotor (52, 54) en quittant une première position dirigée vers le carter de séparation (58, 60), caractérisée en ce que l'axe de rotation (191) du rotor (52, 54) est décalé radialement par rapport à l'axe longitudinal du carter de séparation (58, 60) de telle façon que les doigts (192, 198, 198', 232, 250, 264, 284) ne pénètrent dans le tapis de produits de récolte (220) que dans une zone d'un côté du carter de séparation et se plient ou pivotent ainsi sous l'action du tapis de produits de récolte qui se déplace vers l'aval.

2. Moissonneuse-batteuse suivant la revendication 1, caractérisée en ce que les doigts (192, 198, 198', 232, 250, 264, 284) sont disposés sur le rotor (52, 54) de telle façon qu'ils reviennent dans leur première position grâce aux forces centrifuges en sortant du tapis de produits de récolte (220).

3. Moissonneuse-batteuse suivant la revendication 1 ou 2, caractérisée en ce que les doigts (192, 198, 198', 232, 250, 264, 284) peuvent pivoter vers l'aval lors de la rotation du rotor (52, 54) et surtout sous l'effet de la pénétration dans le tapis de produits de récolte et présentent une distance aux nervures de guidage (130, 140 à 147) telle qu'ils longent sans contact les nervures de guidage.

4. Moissonneuse-batteuse suivant une ou plusieurs des revendications précédentes, caractérisée en ce que les doigts (192, 198, 198', 232, 264) sont disposés de façon à être mobiles sur le rotor (52, 54) de telle façon qu'ils peuvent pivoter dans un plan qui s'étend parallèlement à l'axe de rotation (191) du rotor (52, 54).

5. Moissonneuse-batteuse suivant une ou plusieurs des revendications précédentes, caractérisée en ce que l'interstice annulaire formé entre le rotor (52, 54) et la surface intérieure du carter de séparation (58, 60) présente une étendue radiale de degré variable.

6. Moissonneuse-batteuse suivant une ou plusieurs des revendications précédentes, caractérisée en ce que tous les doigts (192, 198, 198', 232, 250, 264, 284) sont disposés, par rapport à l'axe de rotation (191) du rotor (52, 54) les uns après les autres sur une ligne s'étendant en spirale.

7. Moissonneuse-batteuse suivant une ou plusieurs des revendications précédentes, caractérisée en ce que le carter de séparation (58, 60) comporte au moins une partie comportant des orifices de passage et les doigts (192, 198, 198', 232, 250, 264, 284) sont disposés sur le rotor (52, 54) de telle façon qu'ils se déplacent, en quittant le tapis de produits de récolte (220) sur un arc de cercle qui s'étend sensiblement orthogonalement à l'axe de rotation (191) du rotor (52, 54).

8. Moissonneuse-batteuse suivant une ou plusieurs des revendications précédentes, caractérisée en ce que chaque doigt (250) a l'élasticité d'un ressort et est placé fixement en porte à faux sur le rotor (52, 54).

9. Moissonneuse-batteuse suivant une ou plusieurs des revendications précédentes, caractérisée en ce que les doigts sont disposés tout près les uns des autres sous forme de soies (284) de telle façon qu'ils forment une brosse cylindrique (282).

10. Moissonneuse-batteuse suivant la revendication 8, caractérisée en ce que chaque doigt (250) a une élasticité de ressort en direction axiale plus forte que dans la direction périphérique du rotor (52, 54).

11. Moissonneuse-batteuse suivant une ou plusieurs des revendications précédentes, caractérisée en ce que chaque rotor (52, 54) comporte de nombreux contreappuis constituant des butées (196), chaque contre-appui limitant le mouvement de pivotement d'au moins un doigt (198), tandis que les axes longitudinaux de deux doigts (198) contigus sont disposés selon des directions divergentes.

12. Moissonneuse-batteuse suivant une ou plusieurs des revendications précédentes, caractérisée en ce que l'axe de pivotement des doigts (192) est entre l'axe de rotation (191) du rotor (52, 54) et le bout (194) des doigts.

13. Moissonneuse-batteuse suivant une ou plusieurs des revendications précédentes, caractérisée en ce que l'axe de pivotement des doigts (232) se trouve d'un côté de l'axe de rotation (191) du rotor (52, 54) et les bouts (238) des doigts de l'autre côté de l'axe de rotation.

14. Moissonneuse-batteuse suivant une ou plusieurs des revendications précédentes, caractérisée en ce que les doigts (192) sont disposés sur le rotor (52, 54) par groupes, et en ce que chaque groupe comporte au moins deux doigts (192) disposés à distance axiale.

15. Moissonneuse-batteuse suivant une ou plusieurs des revendications précédentes, caractérisée en ce que les doigts (264) place sur le bâti de rotor (268) de façon à pouvoir pivoter s'étendent radialement des deux côtés de l'axe de rotation, et en ce que, lorsque l'un des doigts pivote dans un sens, l'autre doigt pivote forcément en sens opposé

16. Moissonneuse-batteuse suivant la revendication 15, caractérisée en ce que chaque paire de doigts (264) s'étendant en sens opposé est raccordée à au moins un axe commun (272).

17. Moissonneuse-batteuse suivant la revendication 16, caractérisée en ce que l'axe commun (272) des doigts (264) coupe l'axe de rotation (191) du rotor (52, 54) à angle droit.

18. Moissonneuse-batteuse suivant la revendication 16, caractérisée en ce que chaque doigt (264) d'une paire de doigts s'étend sensiblement orthogonalement à l'axe de pivotement commun (272) et des deux côtés de l'axe de rotation du rotor (52, 54).

19. Moissonneuse-batteuse suivant une ou plusieurs des revendications précédentes, caractérisée en ce que le carter de séparation (58, 60) a une conformation sensiblement cylindrique et l'axe de rotation (191) du rotor (52, 54) est disposé excentriquement dans le carter de séparation de telle façon que la distance radiale entre le rotor et le carter de séparation varie entre un minimum et un maximum, la position de distance minimale correspondant à la zone dans laquelle les doigts (194) pénètrent le plus profondément dans les produits de récolte.

20. Moissonneuse-batteuse suivant une ou plusieurs des revendications précédentes, caractérisée en ce que la section du carter de séparation (58, 60) qui comporte des orifices de passage est chevauchée par la zone de travail des doigts (192, 198, 198', 232, 250, 264, 284) où les doigts pénètrent dans les produits de récolte.

21. Moissonneuse-batteuse suivant une ou plusieurs des revendications précédentes, caractérisée en ce que les doigts (192, 198, 198', 232, 250, 264, 284) du rotor (52, 54) et les nervures de guidage (130, 140 à 147) disposées dans le carter de séparation (58, 60) sont réparties uniformément dans le carter de séparation (58, 60), la distance axiale entre les surfaces des nervures de guidage étant supérieure à la distance axiale entre les doigts (192, 198, 198', 232, 250, 264, 284).

22. Moissonneuse-batteuse suivant une ou plusieurs des revendications précédentes, caractérisée en ce que les nervures de guidage hélicoïdales (130, 140 à 147) sont prévues dans la zone de l'intérieur du carter de séparation (58, 60) dans laquelle les doigts (192, 198, 198', 232, 250, 264, 284) pénètrent dans les produits de récolte, la zone de contact couvrant environ 180°.

23. Moissonneuse-batteuse suivant une ou plusieurs des revendications précédentes, caractérisée en ce que les nervures de guidage hélicoïdales (130, 140 à 147) sont formées par des bandes hélicoïdales s'étendant radialement, dont la hauteur augmente dans le sens de rotation, la hauteur maximale se trouvant dans une zone dans laquelle les doigts (192, 198, 198', 232, 250, 264, 284) ne sont pas ou presque pas en contact avec les produits de récolte.

24. Moissonneuse-batteuse suivant une ou plusieurs des revendications précédentes, caractérisée en ce que la zone dans laquelle les doigts (192, 198, 198', 232, 250, 264, 284) pénètrent dans les produits de récolte se trouve au-dessous de l'axe de rotation (191) du rotor (52, 54), et en ce qu'au moins une partie des nervures de guidage (140 à 147) s'étend en direction périphérique de cette zone au point mort supérieur du carter de séparation (58, 60) et augmente continuellement en hauteur à partir de cette zone.

25. Moissonneuse-batteuse suivant une ou plusieurs des revendications précédentes, caractérisée en ce que deux carters de séparation (58, 60) sont placés côte à côte et ont une conformation cylindrique, lesquels sont chargés en produits de récolte par l'intermédiaire d'un batteur (26) dirigé transversalement, d'un ameneur rotatif (48) dirigé parallèlement à lui, ainsi qu'un tambour de dégagement ou tire-paille (44), l'ameneur rotatif (48) étant placé entre le batteur (26) et le tambour de dégagement (44), et le tambour de dégagement (44) et l'ameneur rotatif (48) étant entraînés en sens opposés.

26. Moissonneuse-batteuse suivant la revendication 23, caractérisée en ce qu'une partie de carter d'introduction (66) comprend un fond (70) dirigé sensiblement horizontalement, qui va jusqu'au plan médian du carter de séparation (58, 60), au moins une nervure de guidage (130) s'étendant diagonalement sur le fond (70) de la partie de carter d'introduction (66) jusqu'à une paroi latérale arquée (76, 78).

27. Moissonneuse-batteuse suivant une ou plusieurs des revendications précédentes, caractérisée en ce que l'angle d'hélice de la nervure de guidage (140) dans la partie de carter d'introduction (66) est supérieur à l'angle d'hélice d'au moins une partie de la nervure de guidage (144) dans le carter de séparation (58, 60), ou inversement.

28. Moissonneuse-batteuse suivant une ou plusieurs des revendications précédentes, caractérisée en ce qu'au moins une nervure de guidage en spirale (147) est prévue dans une partie de décharge (62) de chaque carter de séparation (58, 60).

Fig. I

Fig. 2

Fig. 4

Fig. 3

*Fig. 5*

*Fig. 6*

Fig. 7

EP 0 173 223 B1

**Fig. 8**

**Fig. 9**

Fig. 10

Fig. 13

Fig. 14

Fig. 15

Fig. 11

Fig. 12

13

Fig. 16

EP 0 173 223 B1